# EUROPÄISCHE PATENTANMELDUNG

(11) **EP 2 720 330 A1**
(43) Veröffentlichungstag der Anmeldung: **16.04.2014**
(21) Anmeldenummer: 12188447.2
(22) Anmeldetag: 12.10.2012
(51) Int. Cl.: H02G 3/06

(54) **Vorrichtung zum Verbinden von Kabelbahnabschnitten und Kabelbahn**

(71) Anmelder: Zurecon AG, 8003 Zürich (CH)
(72) Erfinder: Pfluger, Gerd, 4625 Oberbuchsiten (CH)
(74) Vertreter: Rutz & Partner

(57) **Zusammenfassung**

Die Vorrichtung (1), die dem Verbinden von Kabelbahnabschnitten (2A, 2B) dient, welche Seitenwände (22) mit wenigstens einer Längsreihe von Wandöffnungen (221) aufweisen, umfasst wenigstens eine Verbindungsplatte (11), die nach der Montage die Endbereiche von zwei einander zugewandten Seitenwänden (22) übergreift und mit diesen verbunden ist. Erfindungsgemäss ist die Verbindungsplatte (11) mit Montageöffnungen (111) versehen, die einen Rasterabstand aufweisen, der zumindest annähernd dem Rasterabstand der Wandöffnungen (221) in den Seitenwänden (22) entspricht. Ferner ist für jeden der Kabelbahnabschnitte (2A, 2B) wenigstens ein hakenförmiges oder ankerförmiges Kopplungselement (121, 2210) vorgesehen, welches mit der zugehörigen Seitenwand (22) fest oder lösbar verbunden und durch eine der Montageöffnungen (111) in der Verbindungsplatte (11) hindurch geführt und arretiert ist.

## Beschreibung

Die Erfindung betrifft eine Vorrichtung zum Verbinden von Kabelbahnabschnitten und eine mit solchen Vorrichtungen versehene Kabelbahn.

In Gewerbe-, Industrie- und Verwaltungsgebäuden sowie in Tunnelbauten werden Kabel, insbesondere Kabel für Stark- und Schwachstromnetze, Leitungen und Rohre, infolge fehlender Eigenstabilität in metallene Kabelbahnen gelegt und so beispielsweise von einem Schaltfeld oder einer Zentrale zu den Verbrauchern geführt. Kabelbahnen dieser Art, die aus einzelnen Abschnitten zusammengesetzt werden, sind beispielsweise aus dem [1] Produktkatalog der LANZ OENSINGEN AG, Juni 2009, bekannt. Zur Verbindung der Kabelbahnabschnitte sind Vorrichtungen verwendbar, die ebenfalls in diesem Produktekatalog beschrieben sind.

Aus [2], EP1049226A2, ist eine solche Verbindungsvorrichtung bekannt, die eine mit Haken versehene Verbindungsplatte umfasst, mittels der stirnseitig aneinander anstossende Seitenwände benachbarter Kabelbahnabschnitte miteinander verbindbar sind. Zur Verbindung der Kabelbahnabschnitte werden Verbindungsplatten verwendet, welche an den Aussenseiten der Seitenwände derart eingehängt werden, dass die Seitenwand des ersten und die dazu korrespondierende Seitenwand des zweiten Kabelbahnabschnitts von der zugehörigen Verbindungsplatte überdeckt und mit dieser formschlüssig gekoppelt ist. In der Folge wird die Verbindungsplatte anhand eines Sicherungsmittels fixiert, welches zum Beispiel in den Abschlussrand der Seitenwand eingehängt wird. Das Sicherungsmittel wird mit der Halteplatte drehbar oder verschiebbar verbunden und kann dadurch fixiert werden. Das Sicherungsmittel und die Halteplatte sind dabei aufeinander abgestimmt und miteinander gekoppelt, wobei relativ aufwendige Gelenk-, Scharnier- oder Schieberfunktionen zu realisieren sind. Die Verbindungsvorrichtung ist daher relativ aufwändig ausgestaltet und mit entsprechendem Aufwand zu bedienen. Aufgrund der zu realisierenden Gelenk-, Scharnier- oder Schieberfunktionen ergeben sich zudem Einschränkungen hinsichtlich der Positionierung der Verbindungselemente, welche unten in die Seitenwände der Kabelbahnabschnitte eingreifen. Die zur Realisierung der Gelenk-, Scharnier- oder Schieberfunktionen erforderlichen Verbindungsteile sind zudem genügend stabil auszugestalten, so dass sie auch grösseren Lasten standhalten. Ferner ist zu beachten, dass an den Aussenseiten der Seitenwände montierte Verbindungsvorrichtungen kaum zugänglich sind, wenn die Kabelbahn nahe entlang einer Wand verläuft.

Aus [3], DE19841643A1, ist eine Verbindungsvorrichtung für eine Kabelbahn bekannt, die aus einem im Querschnitt etwa U-förmigen Blechteil besteht, dessen erstes Ende gering verkröpfte Seiten- und Bodenwandungen aufweist, so dass ein weiteres Blechteil mit seinem unverkröpften zweiten Ende in das verkröpfte erste Ende des ersten Blechteils einsetzbar und in dieser Soll-Lage fixierbar ist. An den Seitenwandungen des einen Endes sind Rast- und Riegelausnehmungen ausgebildet, und an den Seitenwandungen des anderen Endes sind dazu passende Rasten und Riegel ausgebildet, so dass die beiden Kabelbahnabschnitte quer zu ihrem Längsverlauf ineinander drückbar und miteinander verbindbar sind. Die Kabelbahnabschnitte dieser Kabelbahn sind daher asymmetrisch als Steckverbinder ausgestaltet. Die Verbindungsvorrichtung ist somit in die Kabelbahn integriert, weshalb die Kabelbahn Teil der Verbindungsvorrichtung und hinsichtlich der Ausgestaltung entsprechend definiert ist. Dadurch resultieren unerwünschte Einschränkungen der Gestaltungsmöglichkeiten der Kabelbahn. Zudem resultiert ein erhöhter Fertigungsaufwand für die Kabelbahnabschnitte mit den darin integrierten Teilen der Verbindungsvorrichtung.

Der vorliegenden Erfindung liegt daher die Aufgabe zugrunde, eine verbesserte Verbindungsvorrichtung für Kabelbahnabschnitte sowie eine verbesserte Kabelbahn mit Kabelbahnabschnitten zu schaffen, die mit solchen Verbindungsvorrichtungen miteinander verbunden sind.

Insbesondere ist eine Verbindungsvorrichtung zu schaffen, die flexibler einsetzbar ist und die Realisierung zusätzlicher Funktionen erlaubt.

Die Verbindungsvorrichtung soll derart ausgestaltet sein, dass die Verbindung mit den Kabelbahnabschnitten optimal gewählt werden kann und nur minimale Belastungen der Verbindungsvorrichtung resultieren. Die Verbindungsvorrichtung soll in der Innenseite der Kabelbahn mit zwei zueinander korrespondierenden Kabelbahnabschnitten verbindbar sein, so dass der Zugriff zu den installierten Verbindungsvorrichtungen stets gewährleistet ist.

Ferner soll die Verbindungsvorrichtung einfach und robust aufgebaut sein und mit geringem Aufwand gefertigt und installiert werden können. Insbesondere soll die Verbindungsvorrichtung ohne die Verwendung von Schrauben montierbar sein.

Weiterhin sollen mit der Verbindungsvorrichtung Kabelbahnen bzw. Kabelbahnabschnitte verbindbar sein, die axial oder geneigt zueinander ausgerichtet sind.

Ferner sollen mit der Verbindungsvorrichtung stabile und tragfähige Verbindungen zwischen den einzelnen Kabelbahnabschnitten realisierbar sein, die hohen Belastungen standhalten.

Weiterhin soll installiertes Kabel im Bereich der Stossstellen zwischen Kabelbahnabschnitten optimal gelagert werden, so dass eine Beschädigung des Kabels, zum Beispiel beim Nachziehen des Kabels, vermieden werden.

Die Kabelbahnabschnitte sollen mit minimalem Aufwand hergestellt, und gestapelt gelagert werden können.

Die erfindungsgemässen Kabelbahnen sollen vorteilhaft in eine beliebige Infrastruktur eingefügt werden können. Insbesondere sollen auch Richtungsänderungen innerhalb der Infrastruktur mit minimalem Aufwand realisiert werden können. Die Kabelbahnen sollen mit geringem Aufwand stabil aufgebaut und ebenfalls mit geringem Aufwand wieder umgebaut werden können.

Diese Aufgabe wird mit einer Verbindungsvorrichtung und einer Kabelbahn gelöst, welche die in Anspruch 1 bzw. 10 angegebenen Merkmale aufweisen. Vorteilhafte Ausgestaltungen der Erfindung sind in weiteren Ansprüchen angegeben.

Die Vorrichtung, die dem Verbinden von Kabelbahnabschnitten dient, welche Seitenwände mit wenigstens einer Längsreihe von Wandöffnungen aufweisen, umfasst wenigstens eine Verbindungsplatte, die nach der Montage die Endbereiche von zwei einander zugewandten Seitenwänden übergreift und mit diesen verbunden ist.

Erfindungsgemäss ist die Verbindungsplatte mit Montageöffnungen versehen, die einen Rasterabstand aufweisen, der zumindest annähernd dem Rasterabstand der Wandöffnungen in den Seitenwänden entspricht. Ferner ist für jeden der Kabelbahnabschnitte wenigstens ein hakenförmiges Kopplungselement vorgesehen, welches mit der zugehörigen Seitenwand fest oder lösbar verbunden und durch eine der Montageöffnungen in der Verbindungsplatte hindurch geführt und arretiert ist.

Mittels der erfindungsgemässen Verbindungsvorrichtung können zwei Kabelbahnabschnitte stabil miteinander verbunden werden. Durch die grundsätzliche funktionale Trennung der Aufgaben der Teile der Verbindungsvorrichtung können die einzelnen Funktionen optimal erfüllt werden.

Mittels der stabilen Verbindungsplatte werden die Seitenwände der Kabelbahn im Bereich der Verbindung zusammengehalten und verstärkt. Dabei ist es auch möglich, dass Teile der Verbindungsplatte formschlüssig in die Wandöffnungen der Seitenwände der Kabelbahn eingreifen, wodurch die Verbindungsplatte in die Seitenwand integriert wird.

Die Verbindungsvorrichtung kann wahlweise an unterschiedliche Kabelbahnen bzw. Kabelbahnabschnitte angepasst werden. Aufgrund der Stabilität der einteiligen oder zweiteiligen Verbindungsplatte kann diese auch mit mehreren Reihen von Montageöffnungen versehen werden, die unterschiedliche Rasterabstände aufweisen, die zu unterschiedlichen Kabelbahnen korrespondieren.

Ferner können mehrere Reihen von Montageöffnungen vorgesehen werden, die an eine gewünschte Montageart oder an eine besondere Kopplungsvorrichtung angepasst sind. In vorzugsweisen Ausgestaltungen ist vorgesehen, dass die Montageöffnungen Längslochungen sind, welche es erlauben, die gehaltenen Kabelbahnabschnitte um einige Millimeter axial zu verschieben, um einen gewünschten Abstand einzustellen. Dies ist insbesondere bei der Verwendung von zweiteiligen Verbindungsplatten vorteilhaft, mittels denen zwei Kabelbahnabschnitte drehbar miteinander verbunden werden.

Die Ankopplung der Verbindungsplatte an die zugehörige Seitenwand der Kabelbahn erfolgt mittels Kopplungsvorrichtungen, welche diese Kopplungsfunktion ausschliesslich und vollständig erfüllen. Die Kopplungsvorrichtung weist wenigstens ein Kopplungselement auf, mittels dessen die Verbindungsplatte ohne die Verwendung von Schrauben stabil mit der zugehörigen Seitenwand der Kabelbahn verbunden wird.

Die Kopplungselemente können unterschiedlich ausgestaltet sein. Besonders vorteilhaft sind elastische Kopplungselemente verwendbar, die nach dem Einschieben automatisch einrasten. Alternativ können Kopplungselemente verwendet werden, die durch Drehen oder Verschieben der Kopplungsvorrichtung arretiert werden. Eine an eine Seitenwand eines Kabelbahnabschnitts angelegte Verbindungsplatte kann daher durch Montage der Kopplungsvorrichtung praktisch mit einem Handgriff fixiert werden. Die Verbindung von zwei Kabelbahnabschnitten kann daher in wenigen Arbeitsschritten rasch vollzogen werden.

Die Verbindungsplatte wird für die Montage derart an die zugehörige Seitenwand der Kabelbahn angelegt, dass die Montageöffnungen der Verbindungsplatte koaxial zu den Wandöffnungen der Seitenwand ausgerichtet sind. Die Kopplungselemente können somit gerade durch die Montageöffnungen und Wandöffnungen hindurchgeführt und fixiert werden. Die Kopplungsvorrichtung umfasst vorzugsweise eine Kopplungsplatte mit mehreren Kopplungselementen, die mit einem Handgriff mit der Verbindungsplatte und der Seitenwand verbindbar ist. Alle Kopplungselemente werden dabei in einem Schritt in die Montageöffnungen und die Wandöffnungen eingeführt und fixiert. Diese Kopplungsvorrichtung kann einfach gefertigt werden, indem die hakenförmigen Kopplungselemente aus der Kopplungsplatte freigeschnitten werden. Vorzugsweise werden die Kopplungselemente derart gebogen, dass sie beim Durchführen durch die Montageöffnungen und die Wandöffnungen komprimiert werden und anschliessend expandieren können, so dass eine automatische Verriegelung eintritt.

In vorzugsweisen Ausgestaltungen ist die Verbindungsplatte mit Flanschelementen versehen, die an der Verbindungsplatte angeformt oder mit dieser verschraubt sind. Anhand der Flanschelemente kann die Kopplungsplatte verschiebbar gelagert und gehalten werden. Die Flanschelemente sind dabei vorzugsweise derart ausgestaltet, dass die Kopplungsplatte insbesondere in der Verriegelungsposition gehalten und vorzugsweise eingerastet ist, so dass sie nur durch Gegendruck wieder gelöst und entfernt werden kann.

Die Verbindungsplatten können vorteilhaft an den Innenseiten der Seitenwände der Kabelkanalabschnitte befestigt werden, so dass sie auch noch leicht zugänglich sind, wenn die Kabelbahn nahe entlang einer Wand verläuft. Sofern beispielsweise eine Änderung der Infrastruktur der Kabelbahnen zu vollziehen ist, so können Verbindungsvorrichtungen mit wenigen Handgriffen gelöst werden, um Installationsänderungen zu vollziehen.

In besonders vorteilhaften Ausgestaltungen werden Verbindungsvorrichtungen mit einer Verbindungsplatte verwendet, die zwei drehbar miteinander verbundene Teilplatten umfasst. Die mit den Teilplatten verbundenen Kabelbahnabschnitte können bedarfsweise gegeneinander geneigt werden. Somit ist es möglich, die Kabelkanalabschnitte zumindest in vertikaler Richtung gegeneinander zu drehen und Kabel, das über einen ersten Kabelbahnabschnitt in einer ersten Ebene zugeführt wird, nach unten oder nach oben in eine zweite Ebene zu überführen.

Die beiden Teile der Verbindungsplatten werden vorzugsweise mit einer oder mehreren Gelenköffnungen versehen, durch die wahlweise ein Gelenkbolzen hindurchgeführt wird. Die beiden durch den Gelenkbolzen miteinander verbundenen Plattenteile können in der Folge gegeneinander gedreht werden. Dabei werden die Öffnungen vorzugsweise derart angeordnet, dass sie möglichst nahe bei der gewünschten Drehachse liegen. Sofern die beiden Kabelbahnabschnitte nach unten gegeneinander gedreht werden sollen, so wird die Drehachse nahe an den Bodenplatten angeordnet. Sofern die beiden Kabelbahnabschnitte nach oben gegeneinander gedreht werden, so wird die Drehachse vorzugsweise auf der Höhe der Oberkanten der Seitenwände der Kabelbahnabschnitte angeordnet. Die Teilplatten werden daher vorzugsweise derart mit Gelenköffnungen versehen, dass der Gelenkbolzen entweder unten oder oben eingesetzt werden kann. Sofern beide Gelenkbolzen eingesetzt sind, resultiert hingegen eine starre Verbindungsplatte, die funktionsgleich zu einer einteiligen Verbindungsplatte ist.

Vorzugsweise werden auf gleicher Höhe mehrere Gelenköffnungen vorgesehen, so dass der Gelenkbolzen durch zwei Gelenköffnungen geführt werden kann, die derart gewählt sind, dass sich die Teilplatten um ein gewünschtes Mass überlappen und zwischen den Kabelbahnabschnitten ein gewünschter Abstand einstellbar ist, welcher es erlaubt, die beiden miteinander verbundenen Kabelbahnabschnitte ungehindert und über einen möglichst grossen Winkel gegeneinander zu drehen. Durch Wahl des Einsatzes der Gelenkbolzen in die passenden Gelenköffnungen kann der Drehpunkt der Verbindungsplatte somit wahlweise verschoben werden.

In einer weiteren vorzugsweisen Ausgestaltung wird vorgesehen, dass die beiden Plattenteile durch ein Gelenk, vorzugsweise ein Scharniergelenk, miteinander verbindbar sind, welches erlaubt, die beiden Plattenteile und somit die gehaltenen Kabelbahnabschnitte seitlich in einer Ebene gegeneinander zu drehen. Dabei wird eine Verbindungsvorrichtung derart montiert, dass die Plattenteile auf einer Seite der Kabelbahn über das Ende der Kabelbahnabschnitte hinausragen.

In einer weiteren vorzugsweisen Ausgestaltung werden die Kabelbahnabschnitte eingangsseitig mit einer wellenförmigen Kabelschutzschwelle versehen, welche in die Bodenplatte eingeprägt werden. Im Bereich der Verbindung der beiden Kabelbahnabschnitte werden die installierten Kabel daher auf den wellenförmigen Kabelschutzschwellen schonend gelagert. Bei einem Nachziehen der Kabel werden diese über die gerundeten Kabelschutzschwellen gezogen, ohne dass der Aussenmantel eines Kabels verletzt wird.

Bei der Fertigung der Kabelbahnabschnitte wird vorzugsweise vorgesehen, dass in die Abwicklung angrenzend an die in die Bodenplatte einzuprägenden Kabelschutzschwellen beidseits je ein Einschnitt eingefügt wird, welcher die Materialzone der Kabelschutzschwelle von der Materialzone der Seitenwände trennt. Auf diese Weise können die Kabelschutzschwellen in die Abwicklung des Kabelbahnabschnitts eingeprägt werden, ohne dass eine Deformation der Materialzone der Seitenwände auftritt, welche das Abwinkeln der Seitenwände behindern würde. Zur Stabilisierung der Eingangszone der Kabelbahnabschnitte wird vorzugsweise in einem Abstand von weniger als zehn Zentimeter von den Kabelschutzschwellen entfernt eine Quersicke in die Bodenplatte eingeprägt, welche der Stabilisierung derselben dient.

Nachfolgend wird die Erfindung anhand von Zeichnungen näher erläutert. Dabei zeigt:
- Fig. 1: eine erfindungsgemässe Kabelbahn 2 mit zwei U-Profil-förmigen Kabelbahnabschnitten 2A, 2B, die je eine Bodenplatte 21 und zwei Seitenwände 22 aufweisen, die anhand einer erfindungsgemässen Verbindungsvorrichtung 1 miteinander verbunden werden;
- Fig. 2: den Kabelbahnabschnitt 2A von Figur 1 während der Installation von Verbindungsvorrichtungen 1 an der Kanalinnenseite jeder Seitenwand 22;
- Fig. 3: die Kabelbahn 2 von Figur 1 mit der teilweise installierten Verbindungsvorrichtung 1 von der anderen Seite gezeigt;
- Fig. 4a-f: Schnittdarstellungen des Kabelbahnabschnitts 2A und der Verbindungsvorrichtung 1 in verschiedenen Ausgestaltungen entlang der in Figur 2 gezeigten Schnittlinie A--A;
- Fig. 5: die Verbindungsvorrichtung 1 in der Ausgestaltung von Figur 3 in einer Explosionsdarstellung mit einer Verbindungsplatte 11 und zwei plattenförmigen Kopplungsvorrichtungen 12A, 12B;
- Fig. 6: die Verbindungsplatte 11 und die zwei plattenförmigen Kopplungsvorrichtungen 12A, 12B von Figur 5 von der anderen Seite gezeigt sowie einen Sicherungsriegel 120;
- Fig. 7a-b: die Verbindungsvorrichtung 1 von Figur 3 in Schnittdarstellungen;
- Fig. 8: die Verbindungsvorrichtung 1 von Figur 3 in einer vorzugsweisen Ausgestaltung mit mittig angeordneten Kopplungselementen 121;
- Fig. 9: eine Verbindungsvorrichtung 1 mit einer zweiteiligen Verbindungsplatte 11, mittels der die beiden Kabelbahnabschnitte 2A, 2B gelenkig miteinander verbindbar und gegebenenfalls in verschiedenen Neigungswinkeln fixierbar sind; und
- Fig. 10: eine zweiteilige Verbindungsplatte 11 sowie zwei Kabelbahnabschnitte 2A, 2B, die je mit einer Kabelschutzschwelle 210 versehen sind.

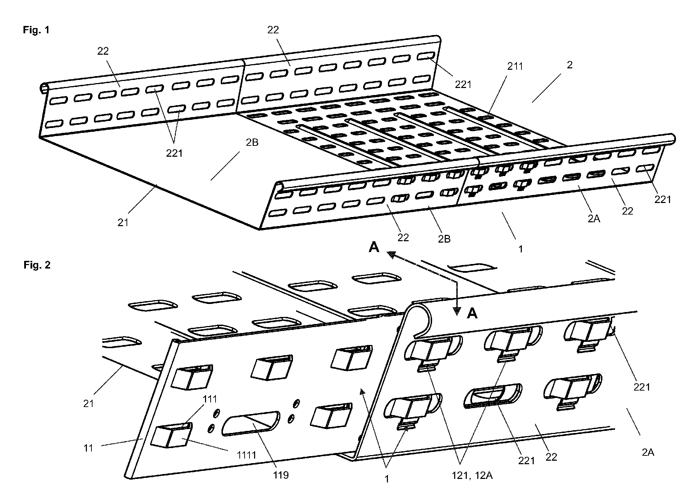

Figur 1 zeigt eine erfindungsgemässe Kabelbahn 2 mit zwei U-Profil-förmigen Kabelbahnabschnitten 2A, 2B, die je eine Bodenplatte 21 mit Bodenöffnungen 211 und zwei Seitenwände 22 mit Wandöffnungen 221 aufweisen. Die Kabelbahn 2 ist während des Vorgangs der Montage einer erfindungsgemässen Verbindungsvorrichtung 1 gezeigt, mittels der einander zugewandte Seitenwände 22 verbunden werden.

Figur 2 zeigt die teilweise installierte bzw. bereits mit einer Seitenwand 22 des ersten Kabelbahnabschnitts 2A verbundene Verbindungsvorrichtung 1 von Figur 1, ohne den zweiten Kabelbahnabschnitt 2B.

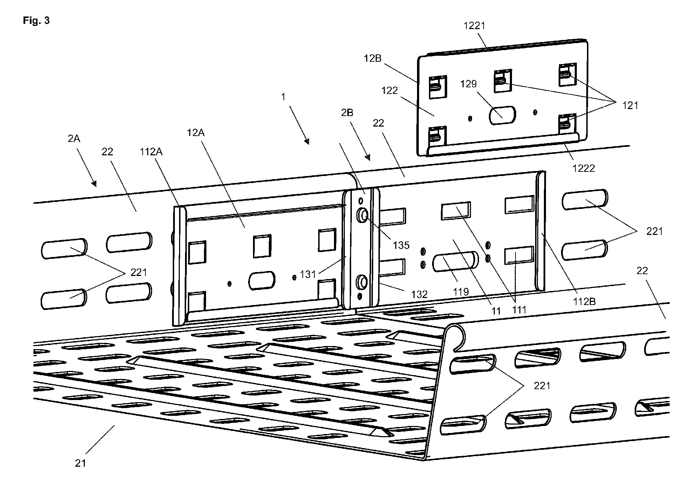

Figur 3 zeigt die Kabelbahn 2 von Figur 1 von der anderen Seite mit der Verbindungsvorrichtung 1 während der Montage.

Aus den Figuren 2 und 3 ist ersichtlich, dass die Verbindungsvorrichtung 1 eine einstückige Verbindungsplatte 11 umfasst, welche die einander zugewandten Seitenwände 22 auf einer Seite der Kabelbahnabschnitte 2A, 2B je hälftig überdeckt. Die Verbindungsplatte 11 ist mit Montageöffnungen 111 versehen, welche im gleichen Rasterabstand wie die Wandöffnungen 221 in den Seitenwänden 22 der Kabelbahnabschnitte 2A, 2B angeordnet sind. Die beiden Hälften der Verbindungsplatte 11 überdecken die Seitenwände 22 der Kabelbahnabschnitte 2A, 2B derart, dass die Montageöffnungen 111 der Verbindungsplatte 11 die Wandöffnungen 221 der Seitenwände zumindest annähernd koaxial überdecken.

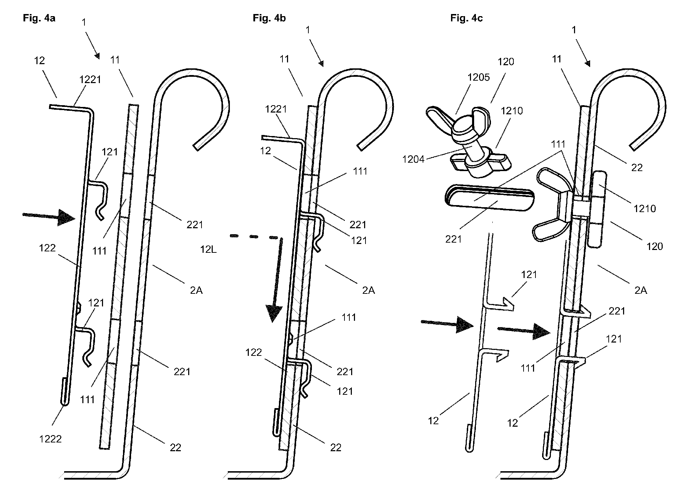

In Figur 2 ist gezeigt, dass durch die Montageöffnungen 111 der Verbindungsplatte 11 und die Wandöffnungen 221 der Seitenwände 22 hindurch Kopplungselemente 121 einer Kopplungsvorrichtung 12A geführt sind, welche an der Aussenseite der Seitenwand 22 anliegen und dadurch verankert bzw. arretiert sind. Die Verbindungsplatte 11 wird dadurch stabil mit der Seitenwand 22 des Kabelbahnabschnitts 2A verbunden. Die zweite Hälfte der einstückigen Verbindungsplatte 11 ragt aus dem Kabelbahnabschnitt 2A heraus. Es ist ersichtlich, dass die Verbindungsplatte 11 fünf Montageöffnungen 111 aufweist, die von Brückenelementen 1111 überdeckt sind. Bei der Fertigung wurden die Montageöffnungen 111 durch seitliche Schnitte freigelegt, wonach die dazwischen liegenden Brückenelemente 1111 nach aussen gepresst wurden, um die Montageöffnungen 111 freizulegen. Die Kopplungselemente 121 können daher durch die Montageöffnungen 111 und die Wandöffnungen 221 geführt und nach unten gestossen und dadurch verankert werden. Die nach aussen gepressten Brückenelemente 1111 ragen somit über die Wandöffnungen 221 hinaus und sind daher innerhalb der Wandöffnungen 221 formschlüssig gehalten. Die Verbindungsplatte wird dadurch faktisch in die Seitenwand 22 integriert und kann Kräfte direkt aufnehmen, die auf die Kabelbahn 2 einwirken, wodurch die Kopplungselemente 221 entlastet werden. Die Verbindungsplatte 11 weist zusätzlich eine Sicherungsöffnung 119 auf, in die ein Sicherungsschlüssel oder Sicherungsriegel, beispielsweise der in Figur 4c gezeigte Sicherungsriegel 120, eingesetzt werden kann, um die Verbindung zu sichern.

In Figur 3 ist gezeigt, dass die Verbindungsplatte 11 anhand von zwei Kopplungsvorrichtungen 12A, 12B mit den Seitenwänden 22 der Kabelbahnabschnitte 2A, 2B verbunden wird. Die Kopplungsvorrichtungen 12A, 12B weisen eine Kopplungsplatte 122 mit je fünf Kopplungselementen 121 auf, die aus der Kopplungsplatte 122 ausgeschnitten, nach aussen gedrückt und hakenförmig geformt sind. Wie in Figur 2 gezeigt, ist die erste Kopplungsvorrichtung 12A bereits installiert. Die zweite Kopplungsvorrichtung 12B muss hingegen noch derart eingesetzt werden, dass die Kopplungselemente 121 durch die Montageöffnungen 111 in der Verbindungsplatte 11 und durch die Wandöffnungen 221 der Seitenwand 22 hindurchgeführt werden. Zum Ergreifen der Kopplungsvorrichtung 12B weist deren Kopplungsplatte 122 an der Oberseite vorzugsweise einen abgewinkelten Halteflansch 1221 auf (siehe auch die Figuren 4a und 4b). Auf der Unterseite 1222 ist die Kopplungsplatte 122 gefaltet und dadurch verstärkt.

Weiter ist gezeigt, dass an beiden Enden der Verbindungsplatte 11 ein Flanschelement 112A, 112B angeformt ist. Ferner ist eine beidseitig mit Flanschelementen 131, 132 versehene symmetrische Flanschplatte 13 mittels Montageelementen 135 in der Mitte der Verbindungsplatte 11 montiert. Für jede Kopplungsvorrichtung 12A, 12B ist daher ein Paar von Flanschelementen 112A, 131 bzw. 112B, 132 vorgesehen, entlang denen die zugehörige eine Kopplungsplatte 122 verschiebbar gehalten ist. Vorzugsweise werden die Kopplungsplatten 122 von den Flanschelementen 112A, 131 bzw. 112B, 132 derart gehalten, dass sie in der Endlage einrasten und sicher gehalten werden. Zur zusätzlichen Sicherung der Kopplungsplatte 122 kann auch der in Figur 4c gezeigte Sicherungsriegel 120 in die Sicherungsöffnungen 119 bzw. 121 in der Kopplungsplatte 122 und der Verbindungsplatte 11 eingesetzt werden.

Die Figuren 4a - 4f zeigen Schnittdarstellungen des Kabelbahnabschnitts 2A und der Verbindungsvorrichtung 1 in verschiedenen Ausgestaltungen entlang der in Figur 2 gezeigten Schnittlinie A-A. Figur 4a zeigt eine Seitenwand 22 des Kabelbahnabschnitts 2A sowie die Verbindungsplatte 11 in einem Querschnitt durch die Wandöffnungen 221 bzw. die Montageöffnungen 111. Ferner ist die Kopplungsvorrichtung 12 mit zwei Kopplungselementen 121 von der Seite gezeigt. In Figur 4b ist gezeigt, dass die Kopplungselemente 121 durch die Montageöffnungen 111 in der Verbindungsplatte 11 und durch die Wandöffnungen 221 in der Seitenwand 22 hindurch geführt und nach unten verschoben wurden. Die Verbindungsplatte 11 wird daher mittels der Kopplungsplatte 122 und der Kopplungselemente 121 gegen die Seitenwand 22 angedrückt und sicher gehalten. Vorzugsweise sind die Kopplungselemente 121 federelastisch ausgestaltet, so dass die Verbindungsplatte 11 spielfrei gehalten wird und Geräusche beim Auftreten von Vibrationen vermieden werden.

Figur 4c zeigt weitere Sicherungsvorrichtungen 12, 120, mittels denen die Verbindungsplatte 11 befestigt werden kann. Oben in Figur 4c ist ein Sicherungsriegel 120 gezeigt, der einen Flügelkopf 1205 aufweist, der durch eine Welle 1204 mit einem ankerförmigen Kopplungselement 1210 verbunden ist. Das Kopplungselement 1210 ist in horizontaler Ausrichtung durch die Montageöffnung 111 und durch die dazu korrespondierende Wandöffnung 221 hindurch führbar und mittels des Flügelkopfs 1205 in der Folge drehbar, so dass eine feste Verbindung bzw. Verankerung resultiert. In der Verbindungsplatte 11 sind vorzugsweise Einformungen vorgesehen, mittels denen der Sicherungsriegel 120 in vertikaler Ausrichtung gehalten und bei der Drehung gegebenenfalls festgezogen wird. Beispielsweise sind symmetrische Rampen mit einer Einsenkung in der Endlage vorgesehen. Bei der Drehung des Flügelkopfs 1205 wird dieser daher angezogen, bis er in der Einsenkung einrastet. Vorzugsweise wird der Flügelkopf 1205 von einem elastischen Element spielfrei gehalten.

Ferner ist eine Sicherungsvorrichtung 12 mit einem federelastischen Kopplungselement 121 gezeigt, welches bei der Durchführung durch die Montageöffnung 111 und durch die Wandöffnung 221 komprimiert wird und an der Aussenseite der Seitenwand 22 expandiert und einrastet.

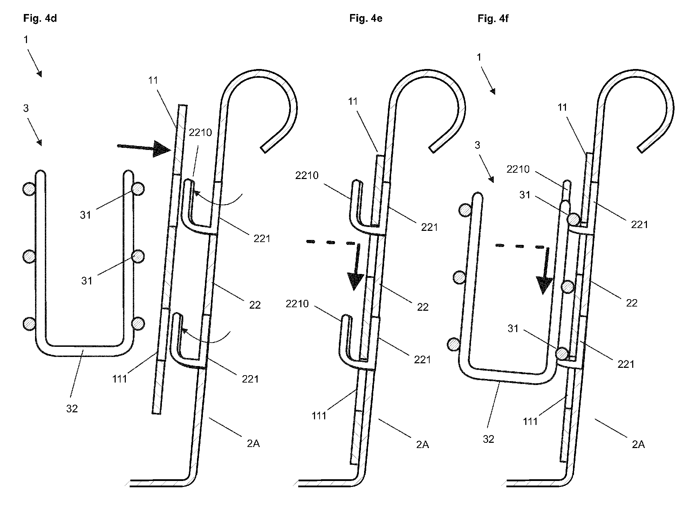

In den Figuren 4d-4f ist eine weitere bevorzugte Ausgestaltung der Verbindungsvorrichtung 1 gezeigt. Figur 4d zeigt, dass aus der Seitenwand 22 des Kabelbahnabschnitts 2A hakenförmige Kopplungselemente 2210 ausgeschnitten und nach innen gebogen wurden, wonach die ebenfalls hakenförmige in Wandöffnungen freigelegt wurden. Die Kopplungselemente 2210 sind somit einstückig mit der Seitenwand 22 verbunden. Die mit Montageöffnungen 111 versehene Verbindungsplatte 11 kann daher in die hakenförmigen Kopplungselemente 2210 eingehängt werden. Vorzugsweise überragen die Kopplungselemente 2210 die Verbindungsplatte 11, so dass sie mittels eines Arretierungselements 31, vorzugsweise mittels eines Drahtes 31 fixiert werden können, welcher ebenfalls in die Kopplungselemente 2210 eingeführt wird. Vorzugsweise wird eine Gitterstruktur 3 mit Längsdrähten 31 bzw. Längsstegen 31 verwendet, die denselben Rasterabstand wie die Kopplungselemente 2210 aufweisen und durch Querstege 32 miteinander verbunden sind. Durch Einhängen der Gitterstruktur 3 kann die Verbindungsplatte 11 daher fixiert werden. In die Gitterstruktur können in der Folge besonders schützenswerte Kabel, wie Kabel für die Datenübertragung, eingelegt werden. Die Gitterstruktur 3 bildet daher einen Teil der Verbindungsvorrichtung 1 und weist neben der Verriegelungsfunktion gleichzeitig eine Kabelführungsfunktion auf. Vorzugsweise werden Gitterstrukturen 3 verwendet, die dieselbe Länge wie die Kabelbahnabschnitte aufweisen.

Figur 4d zeigt den Kabelbahnabschnitt 2A mit den Kopplungselementen 2210 sowie die Verbindungsplatte 11 und die Gitterstruktur 3 in Schnittdarstellung. Figur 4e zeigt den Kabelbahnabschnitt 2A mit der eingehängten Verbindungsplatte 11. Figur 4f zeigt den Kabelbahnabschnitt 2A mit der eingehängten Verbindungsplatte 11 und der eingehängten kanalförmigen Gitterstruktur 3. Die Verriegelung und Sicherung der Verbindungsvorrichtung 1 erfolgt somit durch die Gitterstruktur 3, in die Sonderkabel eingelegt werden.

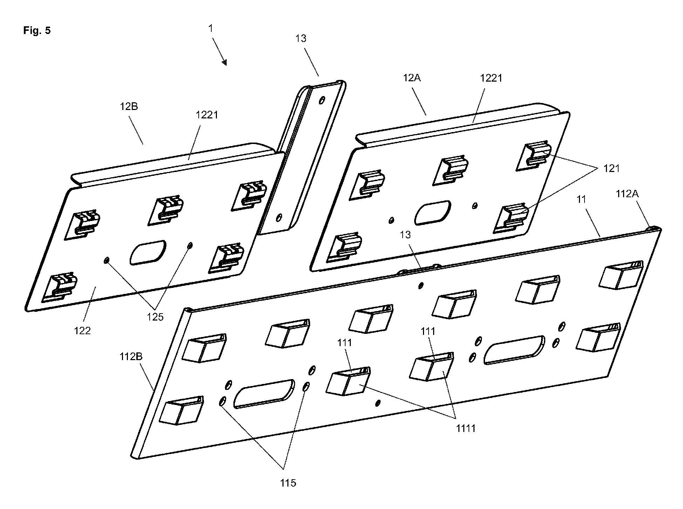

Figur 5 zeigt die Verbindungsvorrichtung 1 in der Ausgestaltung von Figur 3 in einer Explosionsdarstellung mit der Verbindungsplatte 11 und den zwei plattenförmigen Kopplungsvorrichtungen 12A, 12B sowie die Flanschplatte 13 von der Frontseite.

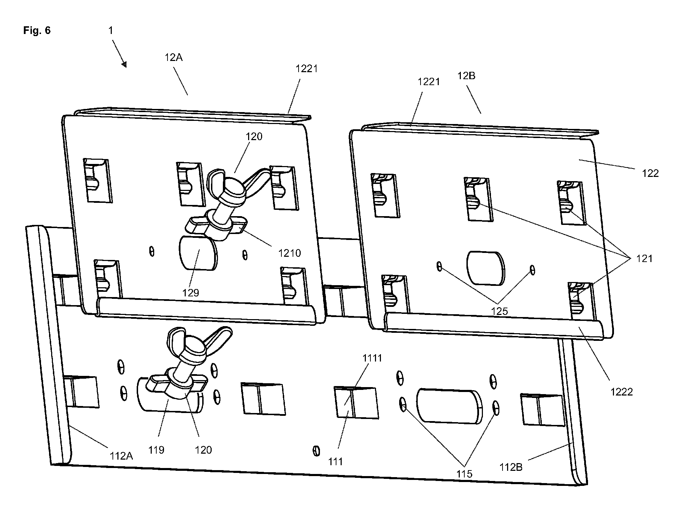

Figur 6 zeigt die Verbindungsvorrichtung 1 in der Ausgestaltung von Figur 3 in einer Explosionsdarstellung mit der Verbindungsplatte 11 und den zwei plattenförmigen Kopplungsvorrichtungen 12A, 12B von der Rückseite. Gezeigt ist ferner der Sicherungsriegel 120, der durch die Sicherungsöffnungen 119 bzw. 129 in der Verbindungsplatte 11 und in der Kopplungsplatte 12A bzw. 12B hindurch geführt werden kann. Mittels des Sicherungsriegels 120 kann die Kopplungsplatte 11 zusätzlich gesichert werden. Es ist jedoch auch möglich, die Verbindungsplatte 11 anhand von mehreren Sicherungsriegeln 120 allein zu befestigen, die somit auch als Kopplungsvorrichtungen verwendbar sind.

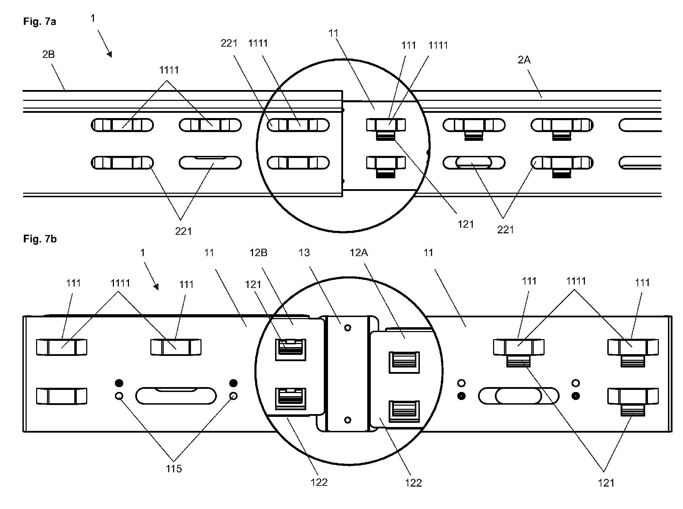

Figur 7a zeigt die beiden Kabelbahnabschnitte 2A, 2B der Figuren 1 und 3 mit der teilweise montierten Verbindungsvorrichtung 1 in einer Schnittdarstellung. Ein Teil des zweiten Kabelbahnabschnitts 2A ist weggeschnitten, so dass die Verbindungsplatte 11 mit den darin eingehängten Kopplungselementen 121 sichtbar ist.

In der in Figur 7b gezeigten Schnittdarstellung sind zusätzlich beide Kabelbahnabschnitte 2A, 2B sowie ein zentraler Teil der Verbindungsplatte 11 weggeschnitten. Daher sind die Flanschplatte 13 sowie die darin geführten Enden der Kopplungsplatten 122 der Kopplungsvorrichtungen 12A, 12B ersichtlich, von denen die eine bereits nach unten in die Verriegelungsposition geschoben wurde.

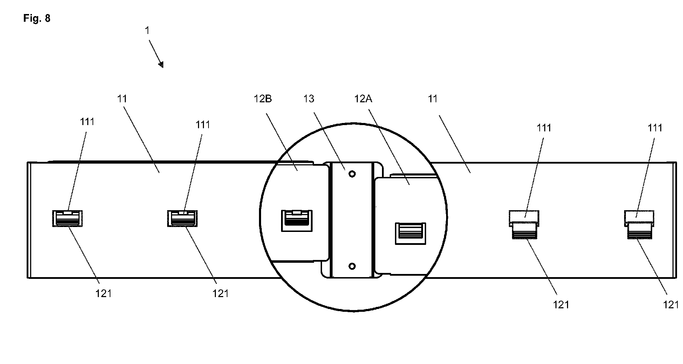

Figur 8 zeigt die Verbindungsvorrichtung 1 von Figur 3 in einer vorzugsweisen Ausgestaltung mit mittig angeordneten Kopplungselementen 121. Die Verbindungsplatte 11, die in der Mitte wiederum aufgeschnitten ist, weist nur eine Reihe von Montageöffnungen 111 auf, die auf halber Höhe angeordnet sind und dadurch auch etwa auf halber Höhe der Seitenwand 22 des betreffenden Kabelbahnabschnitts 2A, 2B erscheinen. Kräfte, die an der Unterseite oder der Oberseite der Seitenwand 22 auftreten, werden daher nur reduziert auf die Kopplungselemente 121 übertragen, weshalb diese weniger belastet werden.

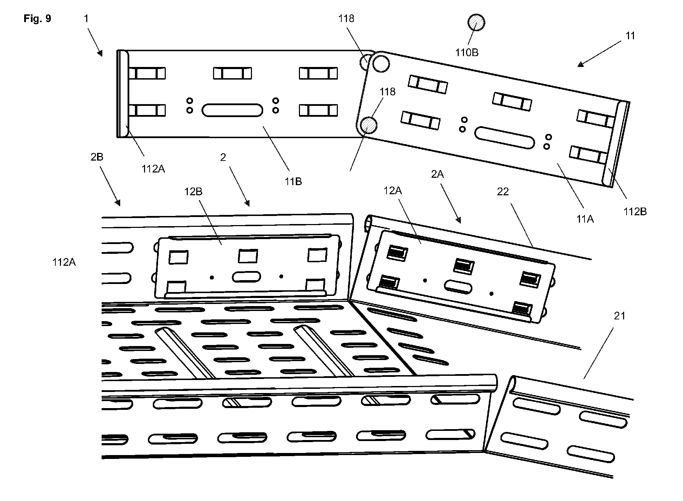

Figur 9 zeigt eine Verbindungsplatte 11, die aus zwei Teilplatten 11A und 11B besteht, die wahlweise gelenkig oder fest miteinander verbunden werden können. Die Teilplatten 11A und 11B weisen an den einander zugewandten Seiten je zwei Gelenköffnungen 118 auf, in die wahlweise Gelenkbolzen 110A eingesetzt werden können, um wenigstens ein Gelenk zu realisieren oder die beiden Teilplatten 11A und 11B starr miteinander zu verbinden. Die Gelenköffnungen 118 sind an der Unterseite und der Oberseite der Teilplatten 11A und 11B vorgesehen, so dass wahlweise eines von zwei Gelenken realisiert werden kann. Es ist gezeigt, dass die beiden unteren Gelenköffnungen 118 der beiden Teilplatten 11A und 11B übereinander liegen und vom Gelenkbolzen 110A durchstossen sind, welcher gleichzeitig die Drehachse des Gelenks bildet, welches auf der Unterseite der Verbindungsvorrichtung 1, nahe der Bodenplatte 21 positioniert ist. Die beiden Teilplatten 11A und 11B und somit auch die beiden damit verbundenen Kabelbahnabschnitte 2A, 2B können somit nach unten gegeneinander gedreht werden. Sofern die oberen Gelenköffnungen 118 durch den Gelenkbolzen 110A miteinander verbunden werden, so wird ein Gelenk an der Oberseite der beiden Plattenteile 11A und 11B realisiert. In dieser Konfiguration können die beiden Teilplatten 11A und 11B und somit auch die beiden damit verbundenen Kabelbahnabschnitte 2A, 2B nach oben gegeneinander gedreht werden. Sofern die unteren und die oberen Gelenköffnungen 118 je durch einen Gelenkbolzen 110A, 110B miteinander verbunden werden, so resultiert eine starre Verbindung der beiden Teilplatten 11A und 11B und somit eine koaxiale Ausrichtung der beiden miteinander verbundenen Kabelbahnabschnitte 2A, 2B.

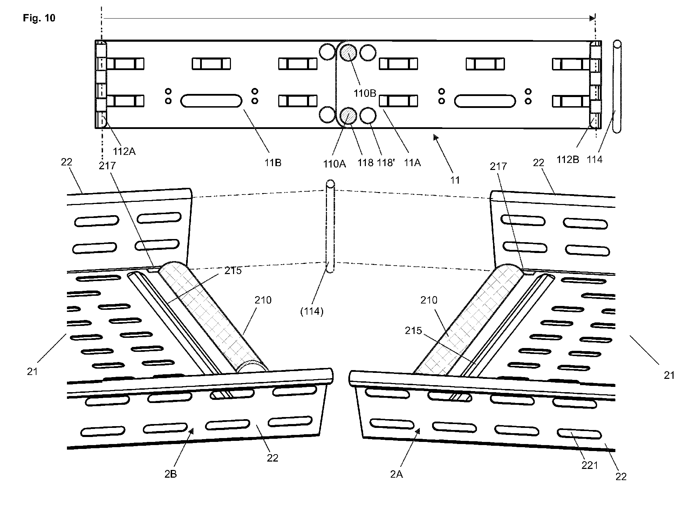

Figur 10 zeigt, dass die Verbindungsplatte 11 mit den beiden Teilplatten 11A, 11B vorteilhaft weitergebildet werden kann. So können an der Unterseite und der Oberseite der Plattenteile 11A und 11B zwei oder mehr Gelenköffnungen 118, 118' vorgesehen werden, welche es erlauben, die Verbindungsplatte 11 zu verlängern oder zu verkürzen.

In Figur 10 ist ferner gezeigt, dass die beiden Teilplatten 11A, 11B an deren Enden mit Flanschelementen oder Lagerelementen 112A, 112B versehen sind, die zusätzlich eine Scharnierhülse bilden, in die zur Bildung eines Scharnierlagers eine Scharnierwelle 114 eingefügt werden kann. Wie dies in Figur 10 gezeigt ist, können dadurch Kabelbahnabschnitte 2A, 2B seitlich gegeneinander geneigt miteinander verbunden werden. Dabei wird vorgesehen, dass die Teilplatten 11A, 11B an den Seitenwänden 22, die voneinander entfernt werden, aus den Kabelbahnabschnitten 2A und 2B heraus geführt werden können, wie dies in Figur 10 symbolisch gezeigt ist.

In Figur 10 ist ferner gezeigt, dass die Bodenplatten 21 der Kabelbahnabschnitte 2A, 2B frontseitig mit wellenförmigen Kabelschutzschwellen 210 versehen sind. Die Kabel liegen daher an den nach oben gerundeten Kabelschutzschwellen 210 und können nicht in Kontakt mit einer Abschlusskante geraten. Beim Nachziehen der Kabel können diese über die Kabelschutzschwellen 210 gleiten, ohne dass ein Kabelmantel verletzt wird. Damit die Kabelschutzschwellen 210 in die Abwicklung des noch nicht gebogenen Blechs eingeprägt werden können, ohne dass das Material der Seitenwände beeinträchtigt wird, wird vor dem Prägevorgang ein Schnitt 217 zwischen der Materialzone der Kabelschutzschwellen 210 und der Materialzone der Seitenwände 22 eingearbeitet. In der Folge werden die Kabelschutzschwellen 210 eingeprägt und erst dann die Seitenwände 22 nach oben gebogen.

Zur Stabilisierung dies Eingangsbereichs der Kabelbahnabschnitte 2A, 2B werden benachbart zu den Kabelschutzschwellen 210, vorzugsweise in einem Abstand von 2cm bis 10cm, parallel zu den Kabelschutzschwellen 210 verlaufende Quersicken vorgesehen. Auf diese Weise wird sichergestellt, dass auch unter Last keine störenden Deformationen der Enden der Kabelbahnabschnitte 2A, 2B auftreten, welche die Verbindungsvorrichtungen 1 und deren Handhabung beeinträchtigen könnten.

Die erfindungsgemässe Verbindungsvorrichtung wird vorzugsweise aus Metall gefertigt. Insbesondere die Kopplungsvorrichtung kann jedoch auch aus Kunststoff gefertigt werden.

## Patentansprüche

1. Vorrichtung (1) zum Verbinden von Kabelbahnabschnitten (2A, 2B), die Seitenwände (22) mit mindestens einer Längsreihe von Wandöffnungen (221) aufweisen, mit wenigstens einer Verbindungsplatte (11), die nach der Montage die Endbereiche von zwei einander zugewandten Seitenwänden (22) übergreift und mit diesen verbindbar ist, **dadurch gekennzeichnet, dass** die Verbindungsplatte (11) mit Montageöffnungen (111) versehen ist, die einen Rasterabstand aufweisen, der zumindest annähernd dem Rasterabstand der Wandöffnungen (221) in den Seitenwänden (22) entspricht und dass für jeden der Kabelbahnabschnitte (2A, 2B) wenigstens ein hakenförmiges oder ankerförmiges Kopplungselement (121, 2210) vorgesehen ist, welches mit der zugehörigen Seitenwand (22) verbunden oder verbindbar und durch eine der Montageöffnungen (111) in der Verbindungsplatte (11) hindurch führbar und arretierbar ist.

2. Verbindungsvorrichtung (1) nach Anspruch 1, **dadurch gekennzeichnet,**
a) **dass** einteilige Verbindungsplatten (11) vorgesehen sind, oder
b) **dass** Verbindungsplatten (11) vorgesehen sind, die zwei Teile (11A; 11B) aufweisen, die je durch wenigstens ein Gelenk (118, 110A, 110B) miteinander verbunden sind.

3. Verbindungsvorrichtung (1) nach Anspruch 2, **dadurch gekennzeichnet, dass** die beiden Teile (11A; 11B) der Verbindungsplatten (11) je eine oder mehrere Gelenköffnungen (118) aufweisen, die wahlweise durch Gelenkbolzen (110A, 110B) miteinander verbindbar sind oder dass die beiden Teile (11A; 11B) durch ein Scharnier (112A, 112B, 114) miteinander verbunden sind.

4. Verbindungsvorrichtung (1) nach Anspruch 1, 2 oder 3, **dadurch gekennzeichnet,**
a) **dass** die Kopplungselemente (121) aus einer Kopplungsplatte (122) ausgeschnitten und hakenförmig geformt sind; oder
b) **dass** jedes hakenförmige oder ankerförmige Kopplungselement (1210) das Endstück eines Schlüssels oder Riegels (120) bildet, welcher eine Kopfelement (1205) aufweist, welches durch ein Verbindungselement (1204), wie eine Verbindungsplatte oder eine Verbindungswelle, mit dem Kopplungselement (1210) verbunden ist; oder
c) **dass** die Kopplungselemente (1210) hakenförmig aus den Seitenwänden (22) ausgeschnitten und nach innen gebogen werden, so dass sie in die Montageöffnungen (111) der Verbindungsplatte (11) einführbar sind.

5. Verbindungsvorrichtung (1) nach Anspruch 4, **dadurch gekennzeichnet, dass** die Kopplungselemente (121, 1210, 2210) durch Drehen oder Verschieben relativ zur Verbindungsplatte (11) arretierbar sind oder dass die Kopplungselemente (121, 1210; 2210) als Rastelemente ausgestaltet sind, die an der Seitenwand (22) der Kabelbahn (2) oder an der Verbindungsplatte (11) einrasten.

6. Verbindungsvorrichtung (1) nach einem der Ansprüche 1-5, **dadurch gekennzeichnet, dass** die Kopplungselemente (121, 1210) zuerst durch die Montageöffnungen (111) in der Verbindungsplatte (11) und weiter durch die Wandöffnungen (221) der zugehörigen Seitenwand (22) eines der Kabelbahnabschnitte (2A bzw. 2B) hindurch geführt und an der der Verbindungsplatte (11) abgewandten Seite der Seitenwand (22) arretiert sind.

7. Verbindungsvorrichtung (1) nach Anspruch 6, **dadurch gekennzeichnet, dass** die Verbindungsplatte (11) mit Flanschelementen (112A, 112B; 13) versehen ist, entlang denen zwei plattenförmige Kopplungsvorrichtungen (12) verschiebbar sind, die je wenigstens ein Kopplungselement (121) aufweisen.

8. Verbindungsvorrichtung (1) nach einem der Ansprüche 4 - 7, **dadurch gekennzeichnet, dass** zwei plattenförmige Kopplungsvorrichtungen (12A, 12B) vorgesehen sind, die je mit wenigstens einer als Riegel ausgestalteten Kopplungsvorrichtung (120) ergänzt werden, dessen Kopplungselement (1210) durch übereinanderliegende Sicherungsöffnungen (119, 129) in der Verbindungsplatte (11) und der zugehörigen plattenförmigen Kopplungsvorrichtung (12A, 12B)

9. Verbindungsvorrichtung (1) nach einem der Ansprüche 1 - 8, **dadurch gekennzeichnet, dass** die Montageöffnungen (111) etwa auf halber Höhe der Verbindungsplatte (11) angeordnet sind oder dass die Verbindungsplatte (11) mit Halteelementen (1111) versehen ist, die formschlüssig in die Wandöffnungen (221) der Kabelbahn (2) eingreifen können und die vorzugsweise die Montageöffnungen (111) überbrücken.

10. Kabelbahn (2) mit wenigstens zwei Kabelbahnabschnitten (2A, 2B), die Seitenwände (22) mit mindestens einer Längsreihe von Wandöffnungen (221) aufweisen, die durch zwei Verbindungsvorrichtungen (1) gemäss einem der Ansprüche 1 - 9 miteinander verbunden sind, die wenigstens eine Verbindungsplatte (11) aufweist, welche die Endbereiche von zwei einander zugewandten Seitenwänden (22) übergreift und mit Montageöffnungen (111) versehen ist, die einen Rasterabstand aufweisen, der zumindest annähernd dem Rasterabstand der Wandöffnungen (221) in den Seitenwänden (22) entspricht und dass für jeden der Kabelbahnabschnitte (2A, 2B) wenigstens ein hakenförmiges oder ankerförmiges Kopplungselement (121, 2210) vorgesehen ist, welches mit der zugehörigen Seitenwand (22) fest oder lösbar verbunden und durch eine der Montageöffnungen (111) in der Verbindungsplatte (11) hindurch geführt ist.

11. Kabelbahn (2) nach Anspruch 10, **dadurch gekennzeichnet,**
a) **dass** die Endbereiche der einander zugewandten Seitenwände (22) je durch eine einteilige Verbindungsplatte (11) miteinander verbunden sind; oder
b) **dass** Verbindungsplatten (11) vorgesehen sind, die je zwei Teile (11A; 11B) aufweisen, die einerseits durch wenigstens ein Gelenk (118, 110A, 110B) miteinander und andererseits je mit dem Endbereich der zugehörigen Seitenwand (22)verbunden sind.

12. Kabelbahn (2) nach Anspruch 11, **dadurch gekennzeichnet, dass** die beiden Teile (11A; 11B) jeder Verbindungsplatte (11) je eine oder mehrere Gelenköffnungen (118) aufweisen, die wahlweise durch Gelenkbolzen (110A, 110B) miteinander verbindbar sind oder dass die beiden Teile (11A; 11B) durch ein Scharnier (112A, 112B, 114) miteinander verbunden sind.

13. Kabelbahn (2) nach Anspruch 10, 11 oder 12, **dadurch gekennzeichnet,**
a) **dass** die Kopplungselemente (121) aus einer Kopplungsplatte (122) ausgeschnitten und geformt sind; oder
b) **dass** jedes hakenförmige oder ankerförmige Kopplungselement (1210) das Endstück eines Schlüssels oder Riegels (120) bildet, welcher ein Kopfelement (1205) aufweist, das durch ein Verbindungselement (1204), wie eine Verbindungsplatte oder eine Verbindungswelle, mit dem Kopplungselement (1210) verbunden ist; oder
c) **dass** die Kopplungselemente (1210) hakenförmig aus den Seitenwänden (22) ausgeschnitten und nach innen oder nach aussen gebogen und sind in die Montageöffnungen (111) der Verbindungsplatte (11) eingeführt sind.

14. Kabelbahn (2) nach Anspruch 13, **dadurch gekennzeichnet, dass** die Kopplungselemente (1210) aus den Seitenwänden (22) ausgeschnitten, in die Montageöffnungen (111) der Verbindungsplatte (11) eingeführt und je durch wenigstens einen Draht (31) gesichert sind, welcher Teil eines Gitterkanals (3) ist.

15. Kabelbahn (2) nach einem der Ansprüche 10-14, **dadurch gekennzeichnet, dass** die Bodenplatte (21) jedes Kabelbahnabschnittes (2A, 2B) vorzugsweise an beiden Enden mit einer quer zur Längsachse des Kabelbahnabschnitts (2A; 2B) verlaufenden, wellenförmigen Kabelschutzschwelle (210) versehen ist, die vorzugsweise beidseitig durch einen Schnitt (217) von den Seitenwänden (22) getrennt ist.
